# EUROPÄISCHE PATENTSCHRIFT

(11) **EP 1 554 164 B1**
(45) Veröffentlichungstag und Bekanntmachung des Hinweises auf die Patenterteilung: **10.05.2006**
(21) Anmeldenummer: 03753504.4
(22) Anmeldetag: 04.10.2003
(51) Int. Cl.: B60R 21/34, E05B 65/19

(54) **VORRICHTUNG ZUM SCHUTZ VON PERSONEN BEI EINEM FRONTALAUFPRALL AUF EIN KRAFTFAHRZEUG**
DEVICE FOR PROTECTING PERSONS DURING A HEAD-ON COLLISION OF A MOTOR VEHICLE
DISPOSITIF CONNU POUR PROTEGER LES OCCUPANTS D'UN VEHICULE AUTOMOBILE LORS D'UNE COLLISION FRONTALE

(30) Priorität: 23.10.2002 DE 10249272
(43) Veröffentlichungstag der Anmeldung: 20.07.2005
(73) Patentinhaber: ISE Innomotive Systems Europe GmbH, 51693 Bergneustadt (DE)
(72) Erfinder: REX, Martin, 51570 Windeck (DE); MIKA, Frank, 51588 Nümbrecht (DE); LANG, Jozsef, H-1131 Budapest (HU)
(74) Vertreter: Fuchs Mehler Weiss & Fritzsche
(86) Internationale Anmeldenummer: PCT/EP2003/010997
(87) Internationale Veröffentlichungsnummer: WO 2004/037617

(56) Entgegenhaltungen:
- WO-A-02/09983
- DE-A- 10 108 882
- DE-A- 10 111 146
- DE-A- 19 721 565
- DE-A- 19 957 868

## Beschreibung

Die Erfindung bezieht sich auf eine Vorrichtung zum Schutz von Personen bei einem Frontalaufprall auf ein Kraftfahrzeug, welches eine den Vorderwagen abdeckende, bis zur vorderen Windschutzscheibe führende Fronthaube aufweist, die windschutzscheibenseitig an beiden Fahrzeugseiten jeweils über eine Scharnieranordnung drehbeweglich an der Karosse des Vorderwagens angelenkt ist, und frontseitig in einem Haubenschloss lösbar befestigt ist.

Jährlich ereignen sich zahlreiche Unfälle, bei denen Fußgänger, seien es Kinder oder Erwachsene, bzw. Zweiradfahrer, von einem Kraftfahrzeug angefahren, auf die Front- oder Motorhaube sowie gegen die Windschutzscheibe geschleudert werden, und dabei zumindest schwere Verletzungen erfahren. Dabei ist insbesondere der Kopf sowie der Oberkörper eines erwachsenen Fußgängers bzw. Zweiradfahrers gefährdet, da dieser bei einem Zusammenprall mit einem Kraftfahrzeug -wie Crash-Versuche und auch die Erfahrungen gezeigt haben -, etwa im hinteren, relativ hartem Bereich an der Fronthaube am Übergang zur Windschutzscheibe aufschlägt und dabei erheblich verletzt wird.

Aufgrund von entsprechenden Forderungen arbeitet die Fahrzeugindustrie intensiv an dem Problem, den Personenschutz insoweit zu verbessern.

Es ist eine Reihe von Möglichkeiten zur Lösung dieses Problems bekannt geworden. Ein Lösungsprinzip besteht darin, den vorgenannten harten Übergangsbereich zur Windschutzscheibe zu entschärfen, d. h. nachgiebiger zu gestalten.

Aus DE 19721565 A1 ist eine sicherheitseinrichtung bekannt, wobei das Haubenschloss fest an dem vorderwagen angebracht ist.

Die DE 27 37 876 A zeigt als Aufprallschutz ein sensorgesteuert auslösbares, den vor der Windschutzscheibe liegenden Fronthaubenbereich in der Fahrzeugbreite überspannendes, folien- oder netzartiges Auffangelement.

Die DE 2711 338 A zeigt eine vergleichbare Konstruktion, bei der sich ein sensorgesteuert aufblasbarer Luftsack im Aufprallfall in den Übergangsbereich zwischen Windschutzscheibe und Frontscheibe legt.

Die DE 28 14107 A in Verbindung mit der DE 28 41 315 zeigen eine mittels eines Aufprall-Sensors betätigte Vorrichtung zur Verstellung der Fronthaube aus einer Ruheposition in eine demgegenüber angehobene, nachgiebige Aufprallposition, d. h. eine sogenannte "aktive Fronthaube". Dadurch, dass die Fronthaube bei der von dem Aufprall-Sensor erfassten Kollision mit einem Fußgänger in eine gegenüber ihrer Ruhe - d. h. Normalfallstellung angehobene Aufprallstellung nachgiebig verstellt wird, wird ein beim Brust- oder Kopfaufprall des Fußgängers im Sinne eines günstigeren Energieabbaues zur Wirkung kommender Deformationsweg der Fahrzeugkarosserie geschaffen, der für verringerte Kopf- und Brustverzögerungen und damit für geringere Verletzungsrisiken sorgt.

Im Fall der vorgenannten DE 2814107 A wird dabei die Fronthaube von mindestens einem im Aufprallfall aufblasbaren Gassack angehoben. Die dargestellte Konstruktion ist jedoch nur für Kraftfahrzeuge anwendbar, bei denen die Fronthaube um eine an der vorderen Oberkante des Vorderwagens liegende Achse schwenkbar ist. Bei Kraftfahrzeugen, bei denen die Fronthaube windschutzscheibenseitig über Scharniere drehbar an den Vorderwagen angelenkt ist, ist die bekannte Konstruktion jedoch nicht anwendbar. Entsprechendes gilt für die vorgenannte DE 28 41 315 A, die eine entsprechende Sicherheitseinrichtung zeigt, bei der der Gassack durch eine Hubkolben-Zylindereinheit ersetzt worden ist, die pyrotechnisch oder hydraulisch bzw. pneumatisch betrieben werden kann.

Die DE 197 12 961 A1 schließlich zeigt ebenfalls einen Aufprallschutz durch eine im Kollisionsfall aktiv nachgiebig aufstellbarer Fronthaube, die windschutzscheibenseitig über eine Scharnieranordnung drehbar angeschlagen ist. Diese Scharnieranordnung ist über einen schwenkbar oder verschiebbar gelagerten Scharnierträger so an der Karosserie des Vorderwagens befestigt, dass im Falle einer Kollision des Fahrzeuges mit einer Person die Fronthaube mittels einer an dem Scharnierträger angreifenden energiespeichernder Einrichtung, z. B. einem Feder-Kraftspeicher, nach oben verschwenkt bzw. verschoben, d. h. angehoben werden kann. Dieser bekannten Konstruktion liegt der Gedanke zugrunde, die Scharnieranordnung selbst mit dem angelenkten Scharnierträger gegenüber der Karosserie anzuheben, so dass es nicht notwendig ist, eine komplexe Entkoppeleinrichtung zwischen Scharnieranordnung und Fronthaube im Falle eines Aufpralles vorzusehen.

Eine weitere Lösung dieser Art zeigt die ältere deutsche Patentanmeldung 102 43 497.2.

Die Lösungen nach dem Stand der Technik zur aktiven Fronthaube mit windschutzscheibenseitiger Anhebung der Fronthaube über den Scharnierdrehanschlag sehen vor, dass das vordere Haubenschloß im geschlossenen Zustand verbleibt. Dadurch ist der Frontbereich der Fronthaube relativ steif und hart, was für den direkten ersten Kontakt zwischen dem Fahrzeug und der Unfallperson zu direkten Verletzungen führen kann, insbesondere im unteren Rumpfbereich der Unfallperson (Oberschenkel und Bauchbereich).

Der Erfindung liegt die Aufgabe zugrunde, ausgehend von der eingangs bezeichneten Vorrichtung diese so auszubilden, dass die Gefahr von schweren Verletzungen bei dem ersten direkten Kontakt zwischen dem Fahrzeug und der Unfallperson vermindert werden können.

Die Lösung dieser Aufgabe gelingt bei einer Vorrichtung zum Schutz von Personen bei einem Frontalaufprall auf ein Kraftfahrzeug, welches eine den Vorderwagen abdeckende, bis zur vorderen Windschutzscheibe führende Fronthaube aufweist, die windschutzscheibenseitig an beiden Fahrzeugseiten jeweils über eine Scharnieranordnung drehbeweglich an der Karosse des Vorderwagens angelenkt ist und frontseitig in einem Haubenschloss lösbar befestigt ist, erfindungsgemäß dadurch, dass das Haubenschloss auf einem Schlossträger befestigt ist, der in einem fahrzeugfesten Gehäuse linear aufstellbar gehaltert ist, derart, dass im Normalzustand der Schlossträger niedergehalten ist und im Kollisionsfall sensorbetätigt für eine begrenzte Aufstellbewegung freigebbar ist.

Dadurch, dass der Schlossträger im aufgestellten Zustand eine Art Deformationszone bildet, da nunmehr der Frontbereich weniger hart bzw. steif ist, kann die Gefahr von schweren Verletzungen signifikant verringert werden.

Weiterbildungen und Ausgestaltungen der Erfindung sind in den Unteransprüchen gekennzeichnet sowie ergeben sich aus der nachfolgenden Figurenbeschreibung.

Anhand eines in den Zeichnungen dargestellten Ausführungsbeispieles wird die Erfindung näher erläutert.

Es zeigen:
- Fig. 1: in einer Längsschnitt-Darstellung eine Schutzvorrichtung zur sensorgesteuerten aktiven Aufstellung des Schlossträgers einer PKW-Fronthaube mittels eines pyrotechnisch ausgelösten Federspeichers im Ruhe-, d.h. Normalzustand,
- Fig. 2: eine Querschnittansicht entlang der Schnittlinie A - A in Fig. 1,
- Fig. 3: in einer isometrischen Darstellung die Schutzvorrichtung nach Fig. 1,
- Fig. 4: in einer Längsschnittdarstellung den aufgestellten Zustand der Schutzvorrichtung nach Fig. 1,
- Fig. 5: in einer Längsschnittdarstellung das Reversieren der aufgestellten Schutzvorrichtung mittels eines Winkelhebels, und zwar im Figurenteil A zu Beginn des Reversiervorganges und im Figurenteil B am Ende des Reversiervorganges, und
- Fig. 6: in einer schematischen Teilansicht den Vorderwagen eines PKW mit aufgestellter Fronthaube im Haubenschlossbereich durch die Vorrichtung nach Figuren 1 bzw. 3.

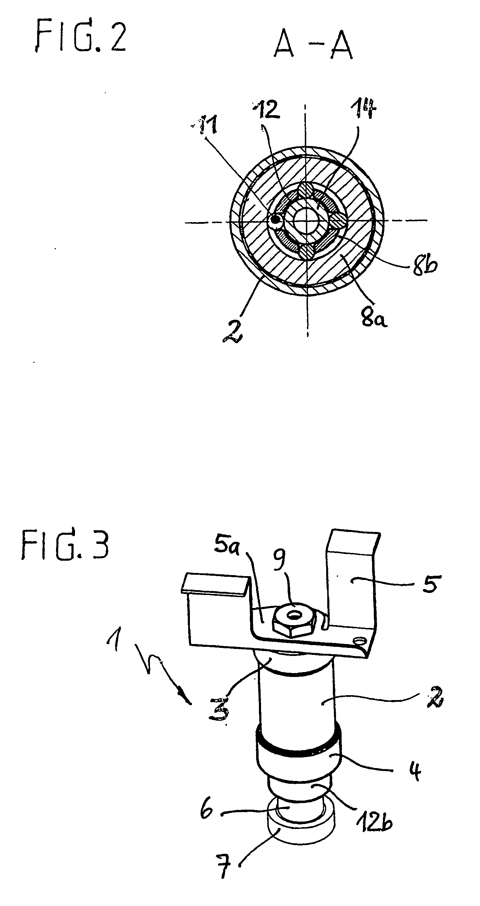

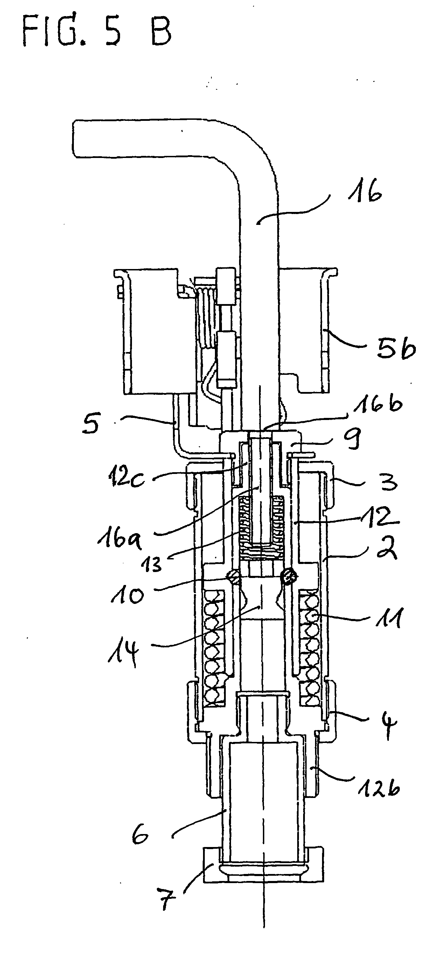

Die Fig. 3 zeigt in einer isometrischen Darstellung den äußerlichen Aufbau der erfindungsgemäßen Vorrichtung 1 zum Schutz von Personen bei einem Frontalaufprall auf die Fronthaube eines Kraftfahrzeuges. Die Vorrichtung 1 weist zunächst ein zylindrisches Gehäuse 2 von z.B. 40 mm Durchmesser auf, das oben mit einer Überwurfmutter 3 und unten ebenfalls mit einer Überwurfmutter 4 abgeschlossen ist. In dem Gehäuse 2 ist ein Halter 5 zur Befestigung des vorderen Haubenschlosses 5b der Fronthaube (Fig. 5 B) ausfahrbar gehaltert.

Mit dem Gehäuse 2 durch Verschrauben verbunden ist ein Patronenhalter 6 in Verbindung mit einem Deckel 7 für die Aufnahme eines pyrotechnischen Aktuators in Patronenform (nicht dargestellt), der im Fall einer drohenden Kollision sensorgesteuert gezündet wird und die Ausfahrbewegung auslöst.

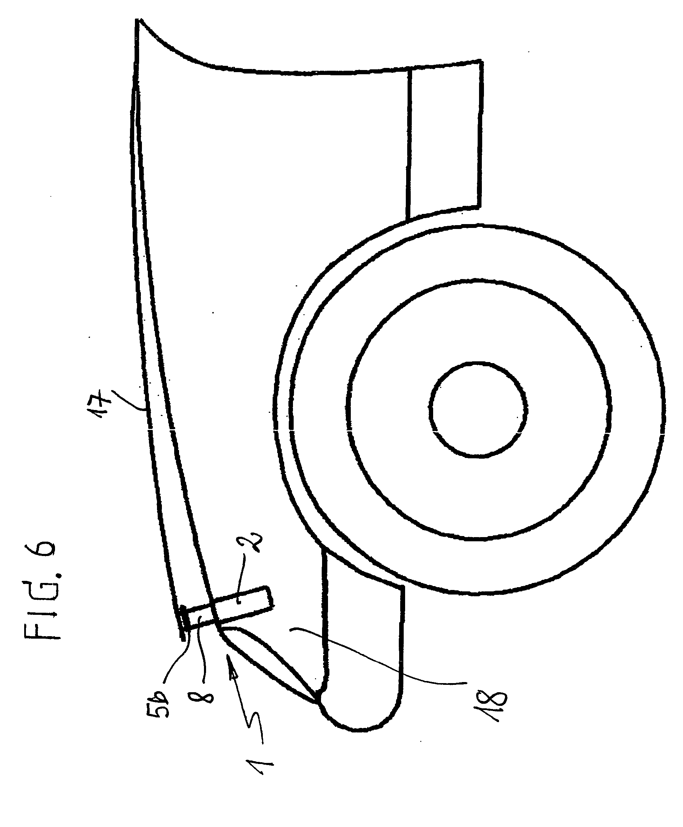

Das Gehäuse 2 ist im Bereich des vorderen Haubenschlosses 5 b der Fronthaube 17 fest mit der Karosserie 18 des Fahrzeuges verbunden, wie in Fig. 6 schematisch dargestellt.

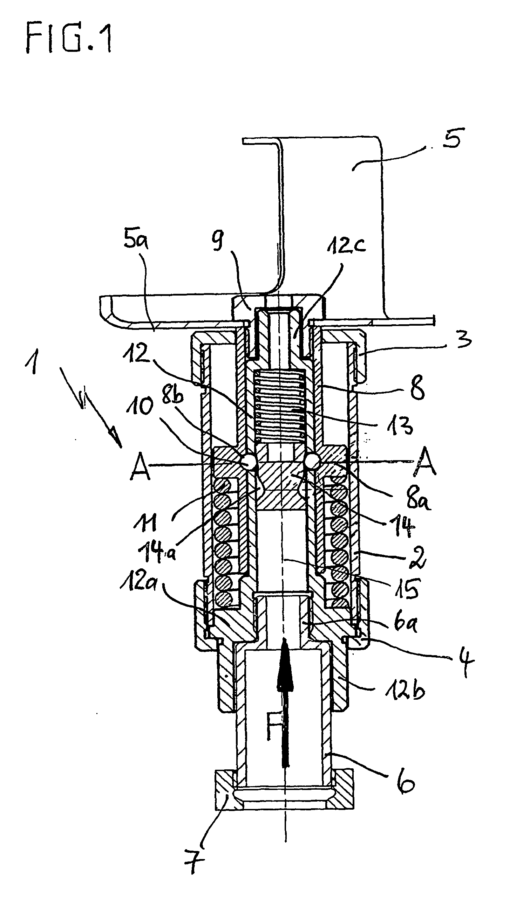

Anhand der Fig. 1 und 2 wird im folgenden der Innenaufbau der Vorrichtung 1 beschrieben.

Zum Ausfahren des Halters 5 ist ein Hubzylinder 8 vorgesehen, der die obere Überwurfmutter 3 verschiebbar durchdringt und der innen mit einem entsprechenden Innengewinde mittels einer Verschlussschraube 9 mit dem Bodenblech 5a des Halters 5 verschraubt ist. Dieser Hubzylinder 8 weist einen den Durchmesser des Gehäuses 2 ausfüllenden, umlaufenden Ringflansch 8a auf, der eine Ringnut 8b für die teilweise, formschlüssige Aufnahme von vier Rastkugeln 10 aufweist (Fig. 2) und der mit seiner unteren Flanke ein Widerlager für eine schraubenförmige Antriebs-Druckfeder 11 bildet, die sich mit dem anderen Ende an einer umlaufenden Flanke 12a einer Führungshülse 12 abstützt.

Im dargestellten Zustand ist dabei die Druckfeder 11 vorgespannt und bildet damit einen Federkraftspeicher.

Die Führungshülse 12 ist mit ihrer umlaufenden Flanke 12a mittels der unteren Überwurfmutter 4 fest mit dem zylindrischen Gehäuse 2 verbunden. Ein unteres Hülsenhemd 12b umschließt zusätzlich gleitend halternd die Patronenhülse 6, die mit einem vorderen verjüngten Gewindeabschnitt 6a in der umlaufenden Flanke 12a verschraubt ist. Auf Höhe der Rastkugeln 10 weist die Führungshülse 12 Durchtrittsöffnungen für eine Radialbewegung und eine formschlüssige Teilhalterung der Rastkugeln auf (Fig. 2). Kopfseitig weist die Führungshülse 12 einen verjüngten Abschnitt 12c auf, der von der Verschlussschraube 9 gleitend umfasst ist und der ein Innengewinde besitzt.

An der inneren, unteren Schulter dieses Abschnittes 12c stützt sich eine Druckfeder 13 ab, die mit ihrem anderen Ende an einer ringförmigen, oberen Stirnseite eines Steuerkolbens 14 anliegt. Dieser Steuerkolben 14 weist eine umlaufende, an den Durchmesser der Rastkugeln angepaßte Ringnut 14a mit einer flach abfallenden oberen Flanke auf.

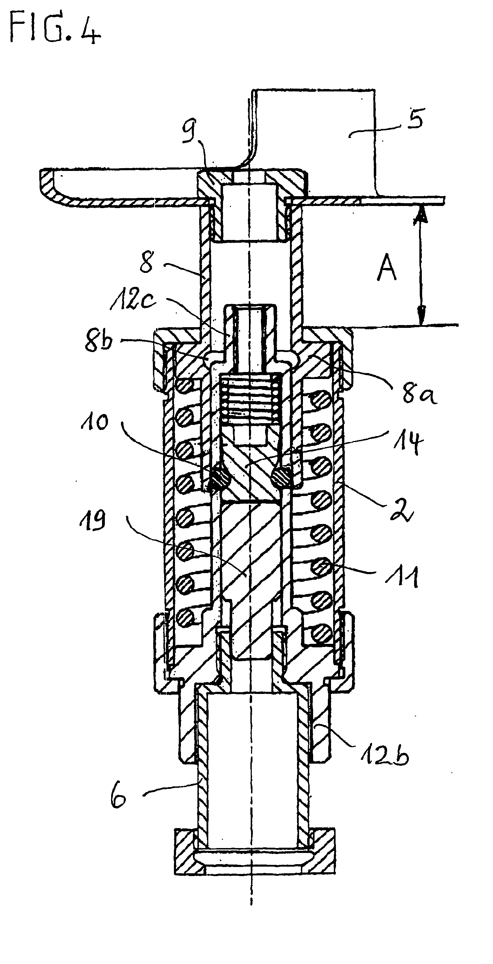

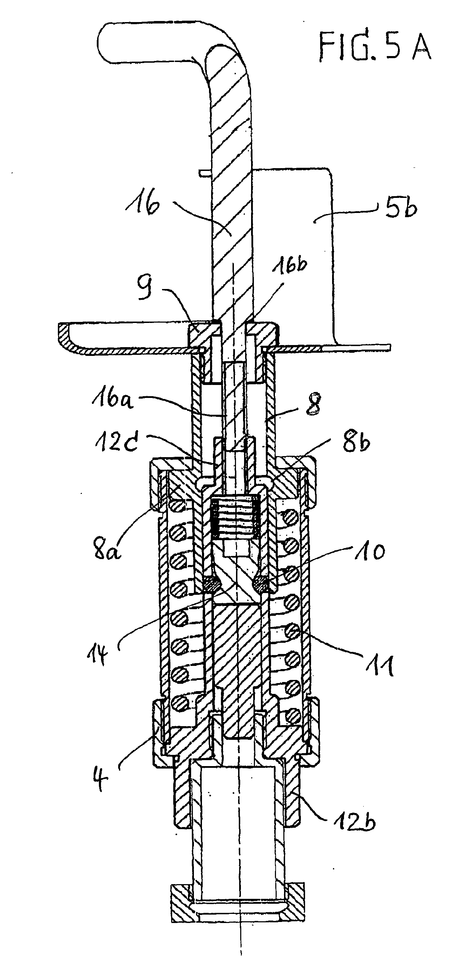

Im dargestellten Zustand, dem Ruhezustand, ist der Hubzylinder 8 über die Rastkugeln 10 mit der Führungshülse 12 formschlüssig verbunden. Der Mantel des Steuerkolbens verhindert dabei, dass die Rastkugeln ihre radiale Lage verändern können. Wird nun eine Kraft F kurzzeitig von unten auf den Steuerkolben 14 aufgebracht, indem das pyrotechnische Auslöseglied in dem Patronenhalter 6 gezündet wird und sich ein entsprechender Gasdruck unter dem Steuerkolben 14 aufbaut, wird dieser gegen die Kraft der Druckfeder 13, diese dabei vorspannend, nach oben verschoben, bis die Rastkugeln 10 in die Ringnut 14a des Steuerkolbens gelangen, weil der Federspeicher 11 versucht, die beiden zueinander versperrten Positionen, den Hubzylinder 8 und die Führungshülse 12, axial auseinander zu treiben und so eine Kraftkomponente auf die Rastkugeln 10 ausüben. (Alternativ kann auch im Raum 15, wie in Fig. 4 angedeutet, ein Schubbolzen 19 angeordnet sein, über den die Kraft des pyrotechnischen Auslösers direkt auf den Steuerkolben übertragen wird). Dabei wandern die Rastkugeln 10 unter der Kraft der Druckfeder 13 radial nach innen, werden danach formschlüssig zwischen der Ringnut 14 a und den Durchtrittsöffnungen in der Führungshülse 12 gehalten, und geben dabei den Hubzylinder 8 frei, so dass die Antriebs-Druckfeder 11 über den Ringflansch 8a den Hubzylinder 8, geführt von der Führungshülse 12, samt Halter 5 und Verschlussschraube 9 sehr schnell aufstellen. Die innere Wandung des Hubzylinders 8 verhindert dabei, dass die Rastkugeln nach außen wandern können.

Dieser aufgestellte Zustand ist in Fig. 4 sowie in Gesamtansicht in Fig. 6 dargestellt. Der Arbeitshub "A" beträgt dabei z.B. 25 mm.

Der Hubzylinder 8 kann dann an der Führungshülse 12 federbetätigt auf- und elastisch nachgebend abwärts gleiten. Diese elastische Nachgiebigkeit beim Aufprall mindert die Gefahr von lebensgefährlichen Verletzungen signifikant.

Da es vorkommen kann, dass die Vorrichtung 1 ausgelöst wird, ohne dass es zu einem Aufprall kommt, und um dann nicht mit vorne, wenn auch nur leicht aufgestellter und noch im Haubenschloss befindlicher Fronthaube 17 weiterfahren zu müssen, ist vorgesehen, dass der Fahrzeugführer die Vorrichtung reversieren kann, d. h. den Hubzylinder 8 samt Verschlussschraube 9 und Haubenschlosshalter 5 gegen die Kraft der Antriebsfedern 11 in die Position nach Fig. 1 drücken kann.

Da dies wegen der großen Federkraft der Antriebsfedern rein manuell praktisch nicht möglich ist, ist vorgesehen, dass im aufgestellten Zustand des Systems nach Fig. 4 in das Innengewinde des oberen Abschnittes 12c, wie in Fig. 5 A dargestellt, ein verjüngter Gewindeabschnitt 16a eines Winkelhebels 16 durch die zentrale Öffnung in der Verschlussschraube 9 und durch das Haubenschloss hindurch einschraubbar ist. Dabei liegt die Schulter 16b des Winkelhebels 16 im Übergang zum Gewindeabschnitt 16a, die im Durchmesser größer ist als der Durchmesser der zentralen Öffnung in der Verschlussschraube 9, auf dieser auf, so dass beim Hineinschrauben des Winkelhebels die Verschlussschraube 9 samt Halter 5 und Hubzylinder 8 unter Vorspannen der Antriebsfedern 11 mittels der Ringschulter 8 a nach unten gedrückt wird. Erreicht, wie die Fig. 5 B zeigt, die Rille 8b in dem Hubzylinder 8 die Höhe der Rille 14a des Steuerkolbens, dann werden die Kugeln 10 durch die Vorspannungskraft der Feder 13, geführt mittels der Schräge bzw. Flanke der Rille 14 a, über diese Schräge in die Rille 14a gedrückt und rasten ein. Das System hat dann wieder die Ausgangsposition nach Fig. 1 erreicht.

In einer Weiterbildung der Erfindung kann das Kugelschloss 10 auch so ausgebildet sein, dass der Hubzylinder 8 in seiner aufgestellten Position verriegelt ist, wobei die Rastkugeln 10 so ausgebildet sein können, dass sie bei Überschreiten einer bestimmten Kraft unter Aufhebung der Verriegelung deformierbar sind und somit als Soll-Deformationsstellen wirken.

Als Erweiterung des Systems ist es möglich, die Vorrichtung 1 in Fig. 1 zusätzlich mit einer präventiven Aufstellung zu versehen, z.B. mittels eines Spindel-Getriebemotors. Durch eine sogenannte Nahfeldsensorik wird ein Fußgänger im Vorfeld erkannt und die Motorhaube in einer vorbestimmten Zeit aufgestellt. Sollte in der vorbestimmten Zeit die Aufstellungshöhe nicht erreicht werden und kommt es zu einem Kontakt mit einem Fußgänger, wird zusätzlich die dargestellte Pyrotechnik mit zu Hilfe genommen, um schnellstmöglich die vorbestimmte Aufstellungshöhe zu erreichen.

Die Fig. 6 zeigt die Ausführung eines Kraftfahrzeuges mit aktiv aufstellbarer Fronthaube 17, bei der nur das Haubenschloß 5 b sensorgesteuert aufstellbar ist.

Es ist jedoch auch eine Ausführung möglich, bei der zusätzlich die in Fig. 6 nicht dargestellten Scharniere der Fronthaube aufstellbar sind, z.B. durch eine Vorrichtung nach der eingangs zitierten älteren deutschen Patentanmeldung 102 43 497.2, bestehend aus einem Scharnierträger für die mittelbare karosserieseitige Anlenkung, der aufstellbar an der Karosse des Vorderwagens angebracht ist, und aus einer an dem Scharnierträger angreifenden energiespeichernden Einrichtung in Form einer Federspeicher-Anordnung sowie aus einer sensorgesteuerten Haltevorrichtung für einen Wirkeingriff mit dem Schamierträger.

Zusammengefasst lassen sich die wesentlichen Merkmale der beschriebenen Ausführung der Erfindung wie folgt darstellen:

Beschrieben wird ein Fußgängerschutz, hier speziell durch Anhebung der Motorhaube im vorderen Bereich (aktuatorische Crashaufstellung).

Über einen Federspeicher wird der erforderliche Aufstellweg unter Berücksichtigung der Aufstellzeit erzielt.

Die Auslösung erfolgt mittels eines pyrotechnischen Auslösers, der den Aktuator durch direkte Krafteinleitung auf einen Schubbolzen oder durch Freisetzen eines Gasdruckes auslöst. Die Freigabe des Federspeichers erfolgt über Anhebung eines Kegels, dadurch werden Rastkugeln freigesetzt.

Das System fährt hoch und hebt gleichzeitig die Motorhaube um den erforderlichen Aufstellweg an.

Die Reversierung (Rückstellung) des Systems erfolgt durch einen Winkelhebel, der am Ende mit einem Gewinde versehen ist. Dieser wird durch das Haubenschloß in die Aktorik eingeführt und durch Eindrehen des Winkelhebels wird die Aktorik reversiert (rückgestellt). Diese Aktivität kann durch den Fahrzeugführer selbständig ausgeführt werden.

## Patentansprüche

1. Vorrichtung (1) zum Schutz von Personen bei einem Frontalaufprall auf ein Kraftfahrzeug, welches eine den Vorderwagen abdeckende, bis zur vorderen Windschutzscheibe führende Fronthaube (17) aufweist, die windschutzscheibenseitig an beiden Fahrzeugseiten jeweils über eine Scharnieranordnung drehbeweglich an der Karosse des Vorderwagens angelenkt ist, und frontseitig in einem Haubenschloss lösbar befestigt ist, **dadurch gekennzeichnet, dass** das Haubenschloss (5b) auf einem Schlossträger (5) befestigt ist, der in einem fahrzeugfesten Gehäuse (2, 3, 4) linear aufstellbar gehaltert ist, derart, dass im Normalzustand der Schlossträger niedergehalten ist und im Kollisionsfall sensorbetätigt für eine begrenzte Aufstellbewegung freigebbar ist.

2. Vorrichtung nach Anspruch 1, **dadurch gekennzeichnet, dass** der Schlossträger (5) auf einem länglichen Stellelement (8) angebracht ist, das mit einer Antriebs-Federanordnung (11) gekoppelt ist und dem ein die Antriebs-Federanordnung (11) im Normalzustand vorgespannt haltendes und bei Aufprallgefahr sensorbetätigt auslösbares Sperrglied (8 b, 10, 12, 14) zugeordnet ist.

3. Vorrichtung nach Anspruch 2, **dadurch gekennzeichnet, dass** das Sperrglied durch formschlüssig verrastbare Kugeln (10) gebildet ist.

4. Vorrichtung nach Anspruch 2 oder 3, **dadurch gekennzeichnet, dass** die Antriebsfederanordnung durch eine Schraubenfeder (11) gebildet ist.

5. Vorrichtung nach einem der Ansprüche 2 bis 4, **dadurch gekennzeichnet, dass** das Sperrglied mit einem sensorbetätigten Auslöseglied, vorzugsweise einem pyrotechnischen Auslöseglied, in Wirkkontakt steht.

6. Vorrichtung nach den Ansprüchen 2 bis 5, **dadurch gekennzeichnet, dass** das längliche Stelleelement durch einen Hubzylinder (8) gebildet ist, der mittels eines umlaufenden Ringflansches (8 a) in dem fahrzeugfesten Gehäuse (2, 3, 4) axial verschiebbar gehaltert ist und außen im Bereich zwischen Ringflansch und Gehäuseboden von der Schraubenfeder (11) konzentrisch umgeben ist.

7. Vorrichtung nach Anspruch 6, **dadurch gekennzeichnet, dass** im Innern des Hubzylinders (8) im Gleitkontakt damit eine fahrzeugfeste Führungshülse (12) angeordnet ist, die peripher Durchtritts- und Halteöffnungen für Rastkugeln (10) aufweist, dass der Ringflansch (8 a) eine Ringnut (8 b) für eine teilformschlüssige Aufnahme der Rastkugeln (10) im Sperrfall besitzt, und dass die Schraubenfeder (11) zwischen dem Ringflansch (8 a) und einem gehäusebodenseitigen vorspringenden Ende (12 b) der Führungshülse (12) eingespannt ist.

8. Vorrichtung nach Anspruch 7, **dadurch gekennzeichnet, dass** im Innern der Führungshülse (12) ein Steuerkolben (14) mit einer umlaufenden Ringnut (14 a) zur Teilaufnahme der Rastkugeln (10) im Auslösefall federvorbelastet gleitbar gehaltert ist, der im direkten Wirkkontakt mit dem sensorbetätigen Auslöseglied steht.

9. Vorrichtung nach Anspruch 7 oder 8, **dadurch gekennzeichnet, dass** die Führungshülse (12) kopfseitig einen verjüngten Abschnitt (12 c) mit einem Innengewinde aufweist, in das ein verjüngter Gewindeabschnitt (16 a) eines Winkelhebels (16) zum Reversieren des aufgestellten Hubzylinders (8) einschraubbar ist, und dass ein mit dem Hubzylinder (8) in Verbindung stehender Anschlag (9) für einen Wirkeingriff mit einer Schulter (16 b) am Winkelhebel (16) vorgesehen ist.

## Claims

1. A device (1) for protecting persons during a head-on collision with a motor vehicle, which device comprises a bonnet (17) that covers the front end of the car and extends as far as the front windscreen, and at both sides of the vehicle is rotatably hinged to the body of the front end of the car at the windscreen end via a respective hinge arrangement, and is detachably fastened at the front end within a bonnet lock, **characterised in that** the bonnet lock (5b) is fixed to a lock support (5), which is mounted so that it can be raised up rectilinearly in a housing (2, 3, 4) fixed to the vehicle, such that in the normal state the lock support is held down and in the event of a collision is releasable by sensor actuation for a limited movement into a raised-up position.

2. A device according to claim 1, **characterised in that** the lock support (5) is mounted on an elongate adjusting element (8) that is coupled to a driving spring arrangement (11) and has associated with it a locking member (8b, 10, 12, 14), which holds the driving spring arrangement (11) biased in the normal state and when there is a danger of collision is releasable by sensor actuation.

3. A device according to claim 2, **characterised in that** the locking element is formed by positively lockable balls (10).

4. A device according to claim 2 or 3, **characterised in that** the driving spring arrangement is formed by a helical spring (11).

5. A device according to any one of claims 2 to 4, **characterised in that** the locking element is in operative contact with a sensor-actuated release element, preferably a pyrotechnic release element.

6. A device according to any one of claims 2 to 5, **characterised in that** the elongate adjusting element is formed by a lifting cylinder (8), which is axially slidably mounted by means of a circumferential annular flange (8a) in the housing (2, 3, 4) fixed to the vehicle and externally in the region between the annular flange and housing base is concentrically surrounded by the helical spring (11).

7. A device according to claim 6, **characterised in that** inside the lifting cylinder (8) in sliding contact therewith is arranged a guide sleeve (12) fixed to the vehicle, which has peripheral through-openings and retaining openings for locking balls (10), **in that** the annular flange (8a) has an annular groove (8b) for an interlocking partial engagement of the locking balls (10) in the locked state, and **in that** the helical spring (11) is tensioned between the annular flange (8a) and an end (12b) of the guide sleeve (12) projecting at the housing base end.

8. A device according to claim 7, **characterised in that** a control piston (14) having a circumferential annular groove (14a) for partial engagement of the locking balls (10) in the released state is slidably mounted under spring bias inside the guide sleeve (12), and is in direct operative contact with the sensor-actuated release element.

9. A device according to claim 7 or 8, **characterised in that** at its head end the guide sleeve (12) has a tapered portion (12c) with an internal thread into which a tapered threaded portion (16a) of an angle lever (16) is screwable to reverse the raised lifting cylinder (8), and **in that** a stop (9) in connection with the lifting cylinder (8) is provided for operative engagement with a shoulder (16b) on the angle lever (16).

## Revendications

1. Dispositif (1) de protection de personnes lors d'une collision frontale sur un véhicule automobile, comportant un capot frontal (17) recouvrant la partie avant de l'automobile et menant jusqu'au pare-brise avant, qui côté pare-brise est articulé sur les deux côtés du véhicule respectivement par un agencement de charnières de façon mobile en rotation sur la carrosserie de la partie avant de l'automobile et qui côté frontal est fixé de façon amovible dans un verrou du capot,
**caractérisé en ce que** le verrou du capot (5b) est fixé sur un support de verrou (5) qui est maintenu dans un boîtier stationnaire sur le véhicule (2, 3, 4), de faon à pouvoir être redressé de façon linéaire, de telle manière que dans une situation normale, le support de verrou soit maintenu vers le bas et en cas de collision, il puisse être libéré pour un redressement limité actionné par un capteur.

2. Dispositif selon la revendication 1, **caractérisé en ce que** le support de verrou (5) est monté sur un élément de réglage allongé (8) qui est couplé avec un agencement de ressorts d'entraînement (11) et auquel est associé un organe de blocage (8b, 10, 12, 14) maintenant l'agencement de ressorts d'entraînement (11) à l'état précontraint dans une situation normale et qui en cas de risque de collision peut se déclencher sous l'action d'un capteur.

3. Dispositif selon la revendication 2, **caractérisé en ce que** l'organe de blocage est formé par des billes pouvant s'enclencher par complémentarité de forme (10).

4. Dispositif selon la revendication 2 ou 3, **caractérisé en ce que** l'agencement de ressorts d'entraînement est formé par un ressort cylindrique (11).

5. Dispositif selon l'une quelconque des revendications 2 à 4, **caractérisé en ce que** l'organe de blocage est en contact actif avec un organe de déclenchement actionné par capteur, de préférence un organe de déclenchement pyrotechnique.

6. Dispositif selon les revendications 2 à 5, **caractérisé en ce que** l'élément de réglage allongé est formé par un vérin de levage (8), qui au moyen d'une bride annulaire périphérique (8a) est maintenu de façon mobile en direction axiale dans le boîtier (2, 3, 4) stationnaire sur le véhicule et qui à l'extérieur, sur la zone entre la bride annulaire et le fond du boîtier est entouré de façon concentrique par le ressort cylindrique (11).

7. Dispositif selon la revendication 6, **caractérisé en ce qu'**une douille de guidage (12) stationnaire sur le véhicule, qui comporte sur sa périphérie des orifices de passage et de maintien pour des billes d'enclenchement (10) est disposée à l'intérieur du vérin de levage (8), en contact glissant avec ce dernier, **en ce que** la bride annulaire (8a) comporte une rainure annulaire (8b) pour une réception par complémentarité partielle de forme des billes d'enclenchement (10) en cas de blocage et **en ce que** le ressort cylindrique (11) est serré entre la bride annulaire (8a) et une extrémité (12b) de la douille de guidage (12) qui saillit du côté du fond du boîtier.

8. Dispositif selon la revendication 7, **caractérisé en ce qu'**un piston de commande (14) avec une rainure annulaire périphérique (14a) pour la réception partielle des billes d'enclenchement (10) en cas de déclenchement, qui est en contact actif direct avec l'organe de déclenchement actionné par capteur est maintenu de façon coulissante et précontraint par ressort à l'intérieur de la douille de guidage (12).

9. Dispositif selon la revendication 7 ou 8, **caractérisé en ce que** la douille de guidage (12) comporte côté tête un tronçon rétréci (12c) avec un taraudage, dans lequel le tronçon fileté rétréci (16a) d'un levier coudé (16) pour le renversement du vérin de levage dressé (8) peut être vissé et **en ce qu'**une butée (9) qui est en liaison avec le vérin de levage (8) est prévue sur le levier coudé (16), pour un engagement actif dans un épaulement (16b).
